# EUROPEAN PATENT APPLICATION

(11) **EP 3 209 000 A1**
(43) Date of publication of application: **23.08.2017**
(21) Application number: 16156297.0
(22) Date of filing: 18.02.2016
(51) Int. Cl.: H04L 29/08, G06F 21/53

(54) **METHOD TO TRANSFER INPUT COMMANDS OF A HARDWARE DEVICE TO STEER A WEB APPLICATION PROCESSED IN A BROWSER**

(71) Applicant: Speech Processing Solutions GmbH, 1100 Wien (AT)
(72) Inventor: Bohumil, Cider, 2500 Baden (AT)
(74) Representative: Schwarz & Partner Patentanwälte OG

(57) **Abstract**

Method to transfer input commands of a hardware device (4) connected to a computer (9) to steer a web application (3) processed in a browser (10) of the computer (9) in a way to avoid that the input commands are blocked by a security system like a sandbox wherein the following steps are taken:
Transfer the input commands of the hardware device (4) into the computer (9);
Convert the input commands of the hardware device (4) with a SDK application (12) into TCP/IP data;
Store the TCP/IP data in the SDK application to enable the web application using a GET request command to request the TCP/IP data and to transfer the TCP/IP data using the Internet Protocol Stack (11) from the SDK application into the web application to steer the web application with the input commands of the hardware device extracted from the TCP/IP data.

## Description

The present invention is related to a method to transfer input commands of a hardware device connected to a computer to steer a web application processed in a browser of the computer in a way to avoid that the input commands are blocked by a security system like a sandbox.

A hardware device for dictation applications to be connected to a computer is for instance known under the trademark SpeechMike® sold by company Philips. This hardware device combines dictation steering buttons to generate input commands to steer the cursor of the dictation application with a track ball and to activate and de-activate record and playback modes with a slider. SpeechMike furthermore comprises a microphone to capture audio information and a speaker to output audio information of a dictation.

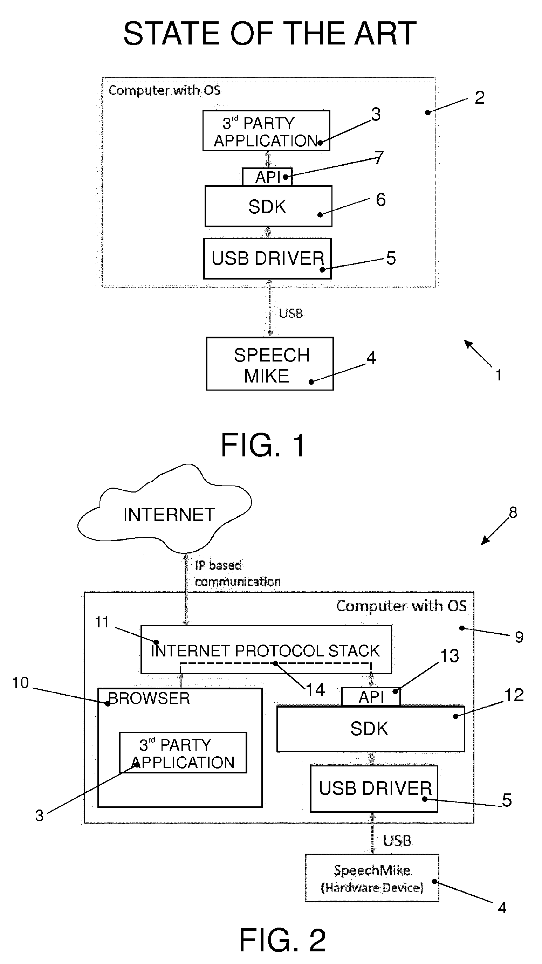

Figure 1 shows a block diagram of a system 1 according to the state of the art that comprises a computer 2 that processes a third party application like a dictation application 3 and a SpeechMike 4 connected via a USB cable to computer 2 that processes the dictation application 3. SpeechMike 4 comprises a USB controller that identifies itself in the USB communication with a USB Driver 5 processed by the computer 2 as USB Human Interface Device to transfer the input commands. As far as audio information is to be transferred between the USB controller of SpeechMike 4 and the USB Driver 5, the USB controller identifies itself as USB Audio Device as defined in the USB Standard. After the first connection of the SpeechMike 4 to the computer 2, SpeechMike 4 is recognized by the USB Driver 5 as a predefined mouse device what only enables to transfer input commands to steer the cursor, but not those input commands provided by e.g. the slider to steer the record and playback modes. To enable the full transfer of input commands and audio information from SpeechMike 4 to the dictation application 3 a software development kit or SDK software component 6 is processed by computer 2 that enables the dictation application 3 to receive all input commands and audio information via the USB cable from SpeechMike 4. The SDK software component 6 furthermore enables to adopt and process the input commands and audio information in a way to provide them at an application programming interface known as API 7 to enable a smooth transfer into the dictation application 3. The SDK software component 6 is technically a COM object, the underlying mechanism for an API call from the dictation application 3 to the SDK software component 6 is a call (jump) to a memory address.

Nowadays more and more third party applications are not stored and processed by the computer 1, but downloaded from a network like the Internet and processed as web application in a browser like those from companies Google (Chrome) or Mozilla Corporation (Firefox). This caused the problem, that input commands of hardware devices like SpeechMike or smart card readers connected to computer 2 cannot be transferred freely into the web application. Until recently it was possible to use loopholes like the Netscape Plugin Application Programming Interface known as NPAPI to transfer such input commands into the web application. In a recent approach to increase the security for computers connected to the Internet a security system known as sandbox has been implemented in web browsers like Google Chrome. A sandbox is a tightly controlled environment where programs and web applications can be processed. Sandboxes restrict what a piece of code can do, giving it just as many permissions as it needs without adding additional permissions that could be abused. A sandbox for instance limits the resources of a web application so that it cannot use a webcam of the computer or any other input commands of a SpeechMike connected to the computer than those of a predefined mouse to steer the cursor of the web application. As a result the problem arises that hardware devices connected to the computer and blocked by the sandbox for the particular web application cannot be used anymore.

It is an objective of the presented invention to provide a method and system to transfer input commands and other information of such hardware devices to web applications in a way to avoid that the input commands are blocked by a security system like a sandbox.

This objective is achieved with a method wherein the following steps are taken: Transfer the input commands of the hardware device into the computer; Convert the input commands of the hardware device with a SDK application into TCP/IP data;
Store the TCP/IP data in the SDK application to enable the web application using a GET request command to request the TCP/IP data and to transfer the TCP/IP data using the Internet Protocol Stack from the SDK application into the web application to steer the web application with the input commands of the hardware device extracted from the TCP/IP data.

The method according to the invention provides the advantage that the SDK application converts the input commands into the format of the HTTP or TCP/IP protocol that is used for the normal download of information from the Internet into the browser of the computer. Security systems like the sandbox will and cannot block this kind of information to be transferred what enables a transfer of input commands from such hardware devices into the browser to steer web applications. A GET request command is used for this transfer. If not blocked by a firewall of the computer the transfer of TCP/IP data can be realized directly via the internal TCP/IP loopback connection towards the Internet Protocol Stack. If such internal way is blocked HTTP or TCP/IP data can be routed from the web application out of the computer and back into the computer, using the computers own IP address, into the SDK application.

As the web application cannot be addressed by the SDK application always the web application hast to fetch the input commands converted into TCP/IP data from the SDK application. If output commands from the web application to the hardware device have to be transferred to e.g. change settings or light a LED of the hardware device the web applications uses a PUT or POST request command to transfer the commands converted into TCP/IP data into the SDK application. This provides the advantage that the security system cannot distinguish these TCP/IP data from other TCP/IP data transferred during normal activity of the browser, what enables to transfer input commands and output commands between the web application and the hardware device.

These and further advantageous embodiments of the invention will be explained based on the following description and the accompanying drawings. The person skilled in the art will understand that various embodiments may be combined.
Figure 1 shows a block diagram of a computer and a SpeechMike that is used to input commands and audio information according to the state of the art.
Figure 2 shows a block diagram of a computer and a SpeechMike that is used to input commands and audio information according to a first embodiment of the invention.
Figure 3 shows a block diagram of typical layers of an Internet Protocol Stack.
Figure 4 shows a block diagram of a computer and a SpeechMike that is used to input commands and audio information according to a second embodiment of the invention.
Figure 5 shows a block diagram of the transfer of TCP/IP data when a GET request command is sent.
Figure 6 shows a block diagram of the transfer of TCP/IP data back as a reply to the previous GET request.

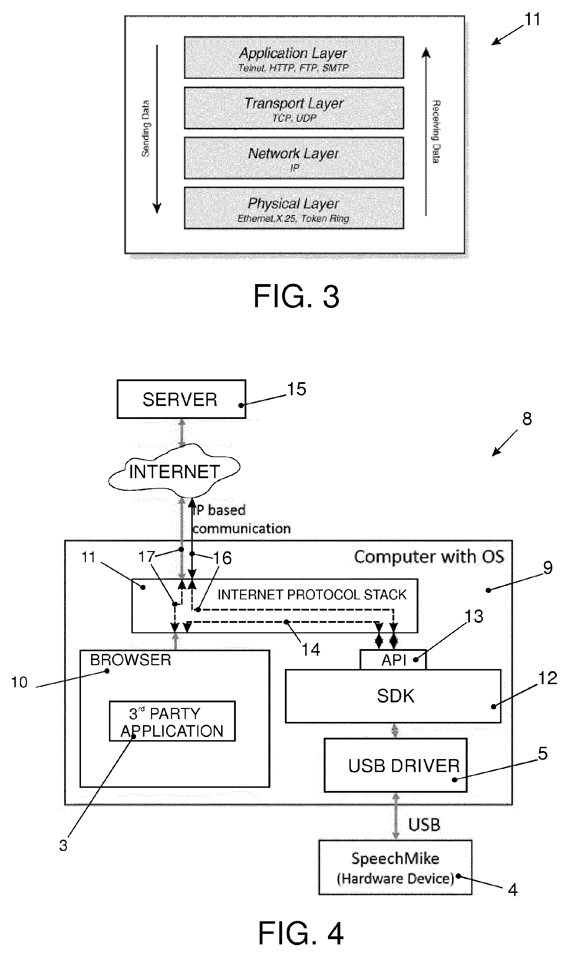

Figure 2 shows as system 8 of a SpeechMike 4 connected via a USB cable to computer 9 that processes USB Driver 5 and the dictation application 3 as web application in browser 10. Computer 9 furthermore processes Internet Protocol Stack 11 known to the man skilled in the art that enables browser 10 to interface with other computers or servers connected to a network like the Internet with an IP based communication. Internet Protocol Stack 11 processes several layers of protocols as shown in Figure 3. It will typically use HTTP which utilizes TCP, however it could also use lower level protocols like TCP or UDP in case there is a technical benefit of using them. Such technical benefits could for instance be speed or firewall issues.

To increase the security of computer 9 a sandbox code is processed by computer 9 as soon as browser 10 is started. The sandbox according to this embodiment defines and stores four functions controls: SetTokenLevel, SetJobLevel, SetIntegrityLevel and SetDesktop. The first three levels go from very strict to very loose and desktop policy is binary to indicate if a target is run on an alternative desktop. This sandbox would block the transfer of input commands from SpeechMike 4 and similar hardware devices into the dictation application 3 processed by browser 10.

Computer 9 furthermore comprises a SDK application 12 that provides input commands from SpeechMike 4 received from USB Driver 5 at API 13 to transfer the input commands to the dictation application 3 according to the following method. In a first step the input commands of the SpeechMike 4 are transferred into computer 9 via the USB Controller of SpeechMike 4 and the USB cable and USB Driver 5. An input command for instance could be activated by a user that presses a button or moves a slider of SpeechMike 4, which input command changes the mode of the dictation application 3 from STOP mode into RECORD mode to record audio information dictated into the microphone of SpeechMike 4.

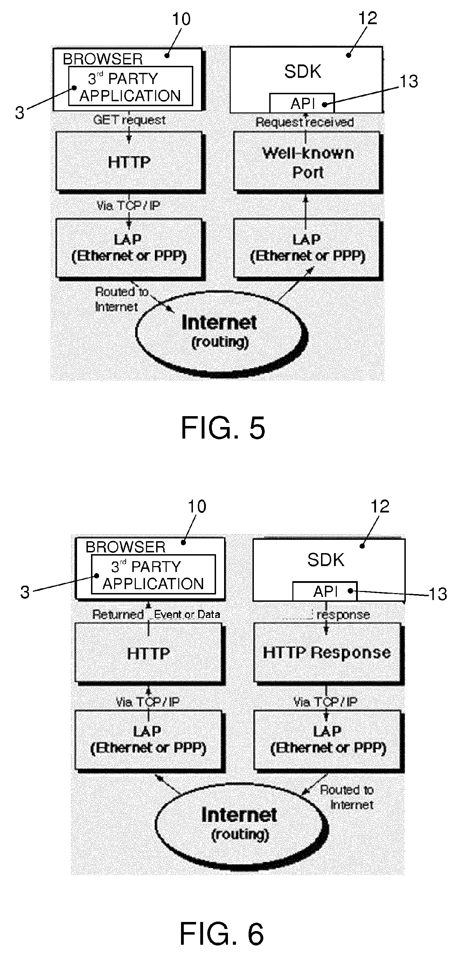

In a second step SDK application 12 converts the input commands of SpeechMike 4 into TCP/IP data that are allowed to be transmitted over the Internet Protocol Stack 11. In a third step these TCP/IP data comprising input commands of SpeechMike 4 are stored in the SDK application 12. This needs to be done as SDK application 12 cannot address dictation application 3 to transfer TCP/IP data into the dictation application 3 as a web application processed in browser 10 does not have a port or other address. Dictation application 3 from time to time sends a GET request command, as shown in Figure 5, to read the memory address within the SDK application 12 to check whether a new input command has been stored to be processed by the dictation application 3. Time to time means e.g. every second or every several seconds to enable a quick response time from the moment a user presses a button or moves a slider of SpeechMike 4 until the dictation application reacts to this input command. Figure 6 shows the transfer of TCP/IP data stored within the SDK application 12 after the GET request command is processed. As a response to this GET request command the TCP/IP data that comprise the converted input commands are transferred into the browser 10 and processed by dictation application 3. Transfer of output commands or information from the dictation application 3 back to SpeechMike 4 is realized in the same way using TCP/IP coded information or commands using a POST request command. Such output command for instance could be a command from the dictation application 3 that lights a red LED at SpeechMike 4 after the dictation application 3 just changed from STOP to RECORD mode. GET request commands and POST request commands are known by the man skilled in the art of Internet protocols. A POST request command is similar to the GET request command, but the answer most of the times is only a OK or ERROR message.

In line with the invention disclosed, these TCP/IP data are transferred through an internal TCP/IP loopback connection 14 by a request of the dictation application 3 processed by browser 10. In state of the art computers the Internet Protocol Stack 11 is used by web applications of the browser 10 or applications stored in computer 9 and processed by computer 9 to transfer information outside of computer 9 via a network or like the Internet to another computer or server connected to the network or Internet. In line with this invention the internal TCP/IP loopback connection 14 is used to transfer information and in particular input commands between API 13 that interfaces with a hardware device like SpeechMike 4 and browser 10. This provides the advantage that hardware devices and related SDK applications that would be blocked by a sandbox, as the sandbox blocks to transfer input commands requested by web applications. Only the step of conversion of the input commands into TCP/IP data enables that the request from the web application will not be blocked by the sandbox.

Figure 4 shows a block diagram of a computer 9 and a SpeechMike 4 that is used to input commands and audio information according to a second embodiment of the invention. In this second embodiment a security server 15 is connected to the Internet and is built to generate tokens or keys to enable communications in a secure way. To enable the transfer of input commands from SpeechMike 4 into browser 10, SDK application 12 contacts the remote security server 15 via connection 16 and the Internet to obtain a token to be used in the communication via the Internet Protocol Stack 11 with the web application to authenticate SpeechMike 4 as authentic product allowed to be use for this internal TCP/IP loopback connection 14. Depending on the implementation the SDK application 12 could also request a token from remote security server 15 via connection 17 and the Internet to check whether the user locked onto computer 9 is authorized to use the internal TCP/IP loopback connection 14 or SpeechMike 4 or the dictation application 3. Furthermore dictation application 3 may contact remote security server 15 via connection 16 and the Internet to obtain a token to be used in communication via the Internet Protocol Stack 11 with the SDK application 12 to authenticate the user of the dictation application 3. This provides the advantage that user rights and device rights may be administered by remote security server 15.

In another embodiment of the invention settings of the hardware device connected to computer 9 and/or settings of the SDK application 12 how the hardware device has to be configured or command sets of the hardware device and/or settings of the user are stored in remote security server 15. This enables to use any computer connected to the Internet, which computer will be set-up and authorized for the particular web application and hardware connected to the computer based on the configurations stored in the security server 15.

Practical tests have revealed that a firewall of computer 9 may be configured in a way to block the internal TCP/IP loopback connection 14. In such cases dictation application 3 sends the GET and POST request commands via connection 17 and Internet by addressing computer 9 with its own IP address what ensures that these request commands are transferred via connection 16 into the SDK application 12. As a response to the GET response command the TCP/IP data that comprise the converted input commands of the hardware device are transferred via connection 16 and the Internet and connection 17 into the dictation application 3. This comprises the advantage that the firewall of the computer 9 will not block the transfer of the TCP/IP data that comprise the input commands of the hardware device.

Firewalls contain packet filters inspecting the packets which are transferred between the computer and the Internet. Typically - for TCP and UDP traffic - the port number used in the incoming and outgoing packets plays a role and many ports are blocked in the firewall by administrators to avoid hacker attacks, especially for incoming traffic. The embodiment of the invention shown in Figure 2 needs an open port for the incoming traffic to the SDK application 12 and this can become a problem in specific environments. Therefore an alternative approach is proposed in the embodiment shown in Figure 4, because in that configuration the security server 15 can serve as a communication bridge between the dictation application 3 and the SDK application 12 while both these programs would only use outgoing traffic to access the security server 15 on a specific port which is less restricted (typically port 80 for HTTP will be open).

This way via the Internet Protocol Stack 11 and the HTTP ports of the firewall is not blocked by the firewall as normal IP based communication to a server connected to the Internet is possible. In this setup both - the web application and the SDK application - use periodic GET commands towards the Internet server to obtain data and POST and PUT commands to send data.

In a first example a LED in the SpeechMike 4 is set as follows. Web application 3 sends a POST command to the remote security server 15 containing the new LED setting. The SDK application 12 queries regularly the remote security server 15 using the GET request and will receive a reply with the new LED setting immediately.

In a second example SpeechMike 4 sends a command to the web application 3. The SDK application 12 sends a POST command to the remote security server 15 containing the newly arrived command. The WEB application 3 queries regularly the remote security server 15 using the GET request and will receive a reply with the new command immediately.

This way of working has the advantage that even for computers with a very strict for low risk configured firewall hardware devices and related SDK applications that would be blocked from transferring input information for web applications into the browser 10 may still be used in line with this method and SDK application 12.

The invention could be used for further hardware device connected to a computer like e.g. a camera, a smart card reader, USB Foot switch, USB Headset with controls, USB Mouse with extended controls, Bluetooth Foot switch, Bluetooth Headset with controls, Bluetooth Mouse with extended controls.

## Claims

1. Method to transfer input commands of a hardware device (4) connected to a computer (9) to steer a web application (3) processed in a browser (10) of the computer (9) in a way to avoid that the input commands are blocked by a security system like a sandbox wherein the following steps are taken:
Transfer the input commands of the hardware device (4) into the computer (9);
Convert the input commands of the hardware device (4) with a SDK application (12) into TCP/IP data;
Store the TCP/IP data in the SDK application to enable the web application using a GET request command to request the TCP/IP data and to transfer the TCP/IP data using the Internet Protocol Stack (11) from the SDK application into the web application to steer the web application with the input commands of the hardware device extracted from the TCP/IP data.

2. Method according to claim 1, wherein the web application periodically uses the GET request command to evaluate whether new input commands from the hardware device were received and stored in the SDK application.

3. Method according to claim 1, wherein the web application uses a POST or PUT request command to transfer TCP/IP data to be used by the SDK application to steer functions of the hardware device.

4. Method according to one of the claims 1 to 3, wherein the SDK application (12) contacts a remote security server (15) connected to a network like the Internet to obtain a token to be used in the communication via the Internet Protocol Stack (11) with the web application (3) to authenticate the hardware device (4) and/or the user of the computer (9).

5. Method according to one of the claims 1 to 4, wherein the web application (3) contacts a remote security server (15) connected to a network like the Internet to obtain a token to be used in the communication via the Internet Protocol Stack (11) with the SDK application (12) to authenticate the user of the web application (3).

6. Method according to claim 4 or 5, wherein settings of the hardware device (4) and/or the SDK application (12) and/or the user are stored in the remote security server (15).

7. Method according to any of the claims 1 to 6, wherein the web application (3) transfers the TCP/IP data via HTTP ports of the firewall out of the computer (9) and back into the computer (9) in case the firewall blocks the direct transfer of the TCP/IP data via the Internet Protocol Stack (11).

8. Method according to any of the claims 1 to 7, wherein the browser (10) processes a web dictation (3) application steered by a hardware device (4) with dictation steering buttons and/or a slider to generate input commands and with a microphone and/or a speaker to input and output audio information.

9. System (8) of a computer (9) with a hardware device (4) connected to the computer (9), which computer (9) processes the method according to one or all of the claims 1 to 8.

## Amended claims

### Amended claims in accordance with Rule 137(2) EPC.

1. Method to transfer input commands of a hardware device (4) physically connected to a computer (9) to steer a web application (3) processed in a browser (10) of the computer (9) in a way to avoid that the input commands are blocked by a security system wherein the following steps are taken:
Transfer the input commands of the hardware device (4) into the computer (9);
Convert the input commands of the hardware device (4) with a software development kit application (12) into TCP/IP data;
Transfer the TCP/IP data from the software development kit application using a POST or PUT request command to a remote security server (15) connected to a network to enable the web application using a GET request command to request the TCP/IP data from the remote security server (15) and to transfer the TCP/IP data using an Internet Protocol Stack (11) from the software development kit application via the remote security server (15) into the web application to steer the web application with the input commands of the hardware device extracted from the TCP/IP data.

2. Method according to claim 1, wherein the web application periodically uses the GET request command to evaluate whether new input commands from the hardware device were received in the software development kit application and stored in the remote security server (15).

3. Method according to claim 1, wherein the web application uses a POST or PUT request command to transfer TCP/IP data to the remote security server (15) which TCP/IP data requested by the software development kit application with a GET request command are used by the software development kit application to steer functions of the hardware device.

4. Method according to one of the claims 1 to 3, wherein the software development kit application (12) contacts the remote security server (15) to obtain a token to be used in the communication via the Internet Protocol Stack (11) with the web application (3) to authenticate the hardware device (4) and/or the user of the computer (9).

5. Method according to one of the claims 1 to 4, wherein the web application (3) contacts the remote security server (15) to obtain a token to be used in the communication via the Internet Protocol Stack (11) with the software development kit application (12) to authenticate the user of the web application (3).

6. Method according to claim 4 or 5, wherein settings of the hardware device (4) and/or the software development kit application (12) and/or the user are stored in the remote security server (15).

7. Method according to any of the claims 1 to 6, wherein the web application (3) transfers the TCP/IP data via HTTP ports of the firewall out of the computer (9) and back into the computer (9) only in case a firewall blocks the direct transfer of the TCP/IP data via the Internet Protocol Stack (11).

8. Method according to any of the claims 1 to 7, wherein the browser (10) processes a web dictation (3) application steered by a hardware device (4) with dictation steering buttons and/or a slider to generate input commands and with a microphone and/or a speaker to input and output audio information.

9. System (8) of a computer (9) with a hardware device (4) physically connected to the computer (9), which computer (9) processes the method according to one or all of the claims 1 to 8.
